# EUROPEAN PATENT APPLICATION

(11) **EP 1 885 105 A2**
(43) Date of publication of application: **06.02.2008**
(21) Application number: 07015114.7
(22) Date of filing: 01.08.2007
(51) Int. Cl.: H04M 1/2745

(54) **Method and mobile terminal for expediently editing telephone number**

(30) Priority: 01.08.2006 KR 20060072521
(71) Applicant: Samsung Electronics Co., Ltd., Yeongtong-gu Suwon-city, Gyeonggi-do 442-742 (KR)
(72) Inventor: Shin, Yong, Suwon-si, Geyonggi-do 443-742 (KR); Jeon, Chul-Yong, Suwon-si, Geyonggi-do 443-742 (KR)
(74) Representative: Grünecker, Kinkeldey, Stockmair & Schwanhäusser Anwaltssozietät

(57) **Abstract**

Disclosed is a mobile terminal having an expedient telephone number editing and dialing function. When a user presses a SEND key during the display of a telephone number detected from a phonebook, the mobile terminal detects a SEND key input pattern and processes the telephone number according to the SEND key input pattern. Particularly, when the SEND key is pressed in a predetermined telephone number editing pattern, the mobile terminal initiates a mode for editing the telephone number so that the user can easily edit the telephone number, for example, by adding a specific code or digit, without the need for excessive key-pressings to select the telephone number editing mode.

## Description

The present invention relates to a method for editing a telephone number stored in a mobile terminal, and more particularly to an expedient method for editing a telephone number stored in a phonebook and dialing the edited telephone number, and a mobile terminal for implementing the method.

Mobile terminals have been developed to offer various additional services, such as caller number non-display and message call services, as well as basic voice call and text or voice message services. The caller number non-display service prevents a caller's phone number from being displayed on a recipient's mobile phone. The message call service allows a mobile phone user to record a voice message and send the recorded voice message to an intended recipient. To use the caller number non-display service, the caller has to enter a service code preset for the caller number non-display, for example, "*23#," before dialing the recipient's phone number. To use the message call service, the caller has to enter a service code, for example "*01," before dialing the recipient's phone number.

Office telephone systems generally allow access to both interoffice extensions and outside lines. To make a regular local call using an office telephone, the caller has to dial a number first, such as "#9" for an outside line and then the intended phone number. The same can be said when dialing an outside line using a mobile phone which is integrated into the office telephone system to work as an extension.

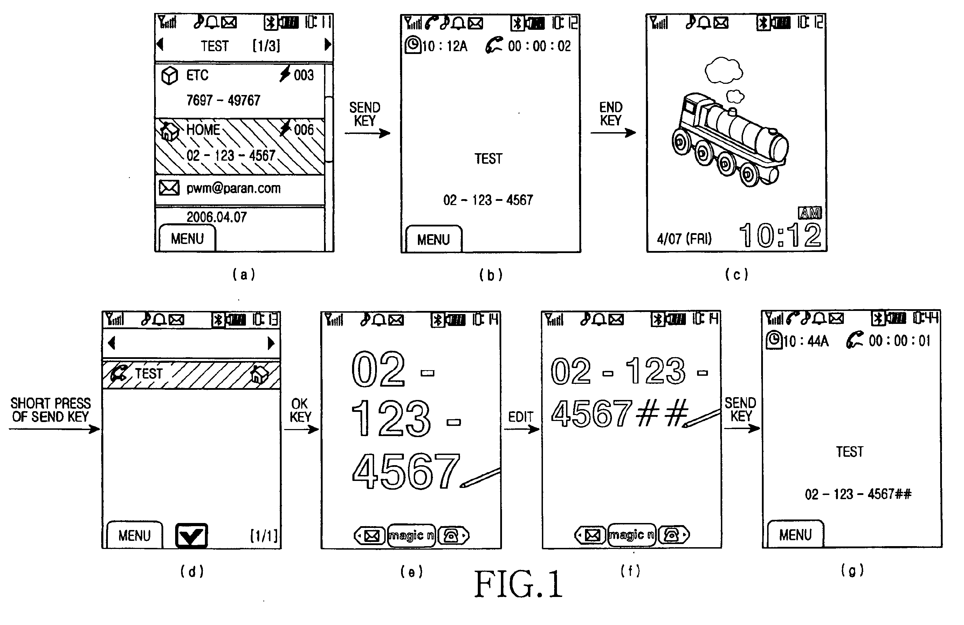

To make an outgoing call to a telephone number stored in a mobile phone having an interoffice extension number, the caller has to first search for the telephone number in a phonebook of the mobile phone and enter a specific code or digit before or after the detected telephone number. Referring to FIGs. 1A to 1G, after searching for a desired telephone number in a phonebook as illustrated in FIG. 1A, the caller presses a SEND key to make a call connection to the detected telephone number as illustrated in FIG 1B, which should be followed immediately by the press of an END key as illustrated in FIG. 1C. With a quick press of the SEND key, a list of recent calls is displayed as illustrated in FIG. 1D. When the caller presses an OK key for the desired telephone number in the displayed list, the telephone number is solely displayed as illustrated in FIG. 1E. The caller can edit the displayed telephone number by adding a specific code or digit as illustrated in FIG. 1F. Then the user can press the SEND key to make an outgoing call to the telephone number as illustrated in FIG. 1G

As explained above, to make an outgoing call to a telephone number stored in a mobile phone which is integrated into an office telephone system and has an interoffice extension number, additional key-pressings are required to enter an outside line access code (for example, "#9") and a caller number non-display service code (for example, "*23#"), if necessary, before or after the stored telephone number. The caller may first search for the telephone number in the phonebook and memorize the telephone number to manually input it together with a required service code. Alternatively, the caller may store the telephone number with the service code added in order to eliminate the need for additional key-pressings at a later time.

Accordingly, the present invention has been made to solve the above-mentioned problems occurring in the prior art. It is an object of the present invention is to provide a method and a mobile terminal for expediently editing a telephone number stored in a phonebook and dialing the edited telephone number.

This object is solved by subject matter of the independent claims.

Preferred embodiments are defined in the dependent claims.

In accordance with the present invention for accomplishing the above object, there is provided an expedient method for editing a telephone number in a mobile terminal, the method comprising determining whether a SEND key is pressed during the display of a telephone number detected according to a user's request for search; determining an input pattern of the SEND key; displaying a mode for editing the detected telephone number when the SEND key is input in a telephone number editing pattern; editing the detected telephone number according to a key input by the user; and dialing the edited telephone number when the SEND key is pressed again during the display of the edited telephone number.

In accordance with another aspect of the present invention, there is provided a mobile terminal capable of expediently editing a telephone number, the terminal comprising: a memory for storing at least one telephone number; a key input unit for outputting a key input signal corresponding to a key pressed by a user; and a control unit for reading out a telephone number from the memory according to the user's request for search, detecting a SEND key signal input in a predetermined telephone number editing pattern, editing the telephone number based on the SEND key signal input from the key input unit, and dialing the edited telephone number when the send key signal is received again from the key input unit.

The above and other aspects, features and advantages of the present invention will be more apparent from the following detailed description taken in conjunction with the accompanying drawings, in which:
FIGs. 1A to 1G illustrate display screens showing a conventional process of adding a specific code to a telephone number stored in a mobile terminal;
FIG. 2 is a block diagram of a mobile terminal having an expedient telephone number editing and dialing function according to a preferred embodiment of the present invention;
FIG. 3 is a flowchart showing a process of performing an expedient telephone number editing function in a mobile terminal according to a preferred embodiment of the present invention; and
FIGs. 4a to 4f illustrate display screens showing the process of FIG. 3.

Hereinafter, preferred embodiments of the present invention will be described with reference to the accompanying drawings. In the following description of the present invention, a detailed description of known functions and configurations incorporated herein will be omitted for clarity and conciseness.

The present invention provides a mobile terminal having an expedient telephone number editing and dialing function. In order to make an outgoing call using this function, a user searches for a desired telephone number in a phonebook of the mobile terminal and press a SEND key in a predetermined telephone number editing pattern during the display of the detected telephone number. The telephone number editing function automatically adds a specific code or digit (for outside line access, caller number non-display or the like) to the detected telephone number, eliminating the need for additional key-pressings.

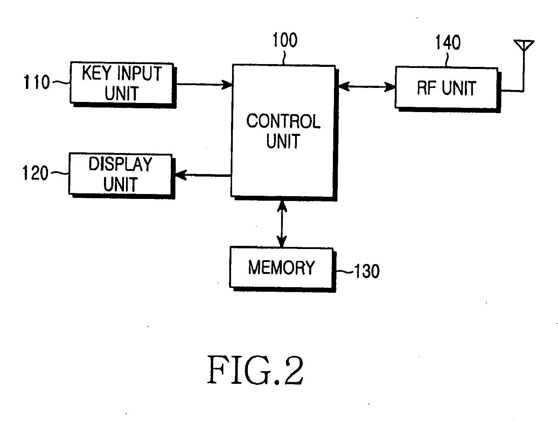

The configuration and operation of a mobile terminal according to the present invention will be explained in detail with reference to FIG. 2. FIG. 2 is a block diagram of a mobile terminal having an expedient telephone number editing function according to a preferred embodiment of the present invention.

A control unit 100 controls the overall operations of the mobile terminal for voice calls, data transmission and other functions. Particularly, the control unit 100 determines a SEND key input pattern when the user presses the SEND key during the display of a telephone number. The control unit 100 also determines how to process the telephone number according to the SEND key input pattern.

According to a preferred embodiment of the present invention, if the SEND key is pressed in a predetermined telephone number editing pattern, the control unit 100 will implement the editing function on the detected telephone number. If the SEND key is pressed in a dialing pattern, the control unit 100 will directly dial the telephone number. According to another embodiment of the present invention, if the SEND key is pressed in a pattern for using a specific service, the control unit 100 will add a corresponding code previously stored in a memory 130, for example, a caller number non-display code ("*23#") or an internal extension access code ("##"), to the telephone number and then dial the edited telephone number.

More specifically, the control unit 100 determines the input pattern of the SEND key which was pressed during the display of a telephone number detected from the phonebook, and controls a display unit 120 to display a mode for editing the telephone number according to the SEND key input pattern. At this time, a cursor blinking at the end or front of the telephone number appears on the display screen. The user can move the cursor to add or delete a specific digit to or from the displayed telephone number or to designate a location in which a code should be inputted. In other words, the user can select the mode for editing the telephone number simply by pressing the SEND key, without the need to make multiple key-pressings to select a telephone number edit/change menu as generally done in a conventional mobile terminal. Various input patterns of the SEND key can be defined according to the SEND key press duration or the number of times the SEND key pressed.

A key input unit 110 connected to the control unit 100 is provided with a plurality of alphanumeric keys and function keys. The key input unit 110 outputs input data corresponding to a key pressed by the user to the control unit 100. According to the present invention, the key input unit 110 transfers a control signal corresponding to a movement or selection under a phonebook menu to the control unit 100. Also, the key input unit 110 transfers a control signal corresponding to the SEND key press duration or the number of times the SEND key pressed to the control unit 100.

The display unit 120 comprises an LCD (Liquid Crystal Display). According to a preferred embodiment of the present invention, the user can press the SEND key during the display of a detected telephone number. The display unit 120 displays a mode for directly connecting a call to the detected telephone number or a mode for editing the telephone number according to the SEND key press duration or the number of times the SEND key pressed.

The memory 130 comprises a ROM (Read Only Memory) and a RAM (Random Access Memory) for storing a plurality of programs and data. Particularly, the memory 130 stores data necessary to display a mode for editing a detected telephone number according to a preferred embodiment of the present invention.

An RF (Radio Frequency) unit 140 connected to the control unit 100 converts audio data or control data into an RF signal and transmits the RF signal. Also, the RF unit 140 receives an RF signal and converts the received signal into audio data or control data which will be outputted.

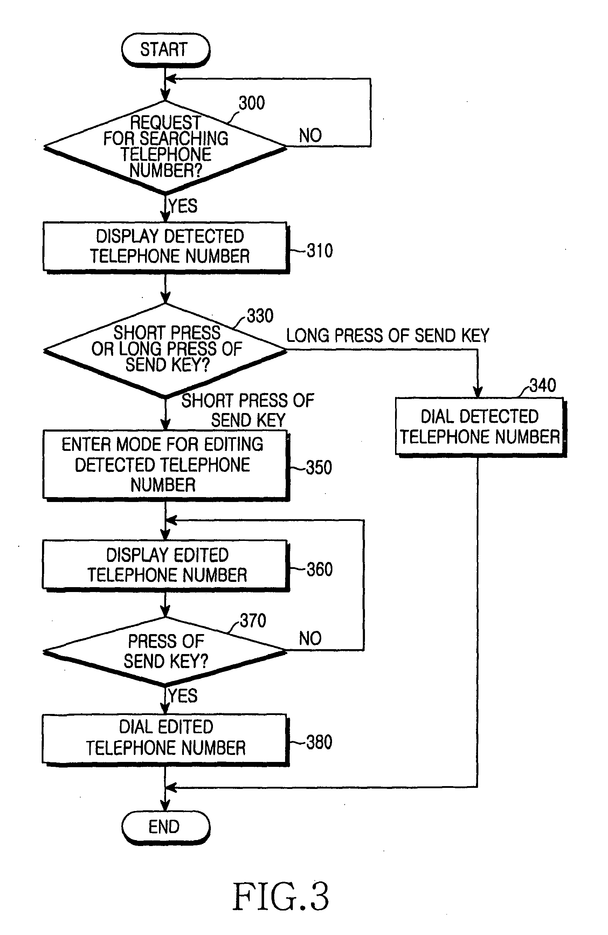

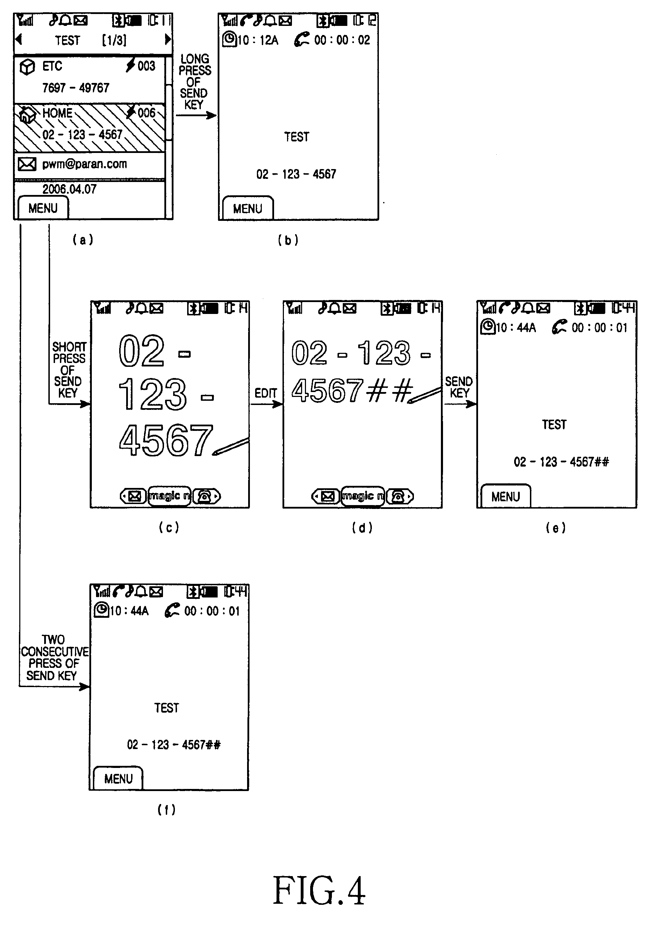

Hereinafter, a process of performing an expedient telephone number editing function in a mobile terminal according to a preferred embodiment of the present invention will be explained in more detail with reference to FIGs. 3 to 4F. FIGs. 4A to 4F illustrate display screens showing the process of FIG. 3.

Referring to FIGs. 3 to 4F, the control unit 100 determines whether a request for searching a desired telephone number has been input in step 300. The user can input the request using a telephone number search menu available in the mobile terminal. Upon detecting the request for a search of a desired telephone number, the control unit 100 proceeds to step 310 in order to search for the requested telephone number and display the detected telephone number. If the user does not input a specific keyword for the search, the control unit 100 will read out all the telephone numbers stored in the memory 130 and display a list of the stored telephone numbers so that the user can search for the requested telephone number using a direction key. As illustrated in FIG. 4A, a highlight marker moves on the listed telephone numbers with the users' clicks of a direction key. In step 330, the control unit 100 determines whether the user presses the SEND key while a specific telephone number is highlighted with the marker. At the same time, the control unit 100 determines whether the press of the SEND key is quick or prolonged (i.e. whether the SEND key is pressed for less than or longer than a predetermined duration).

Although the mobile terminal performs different operations according to the SEND key press duration (for example, dials directly or edits the detected telephone number) in a preferred embodiment of the present invention, the mobile terminal may perform such different operations according to the number of times the SEND key pressed. Also, in accordance with another embodiment of the present invention, the mobile terminal may automatically add a preset code to the detected (or selected) telephone number with the press of the SEND key, and will dial the edited telephone number.

If the press of the SEND key lasts long (in other words, if the send key is pressed over a predetermined duration) in step 330, the control unit 100 will proceed to step 340 in order to dial the detected (or selected) telephone number in the same manner as in a conventional dialing method. In other words, if the user holds down the send key for a long time while a specific telephone number is selected with the highlight marker as illustrated in FIG. 4A, the control unit 100 will initiate a mode for making a call connection to the selected telephone number as illustrated in FIG. 4B.

On the other hand, if the SEND key is pressed for less than the predetermined duration in step 330, the control unit 100 will proceed to step 350 in order to enter a mode for editing the detected telephone number. At this time, a cursor blinking at the end of the telephone number appears on the display screen as illustrated in FIG. 4C so that the user can edit the telephone number by adding or deleting a specific digit or by adding a specific service code. In step 360, the control unit 100 displays the edited telephone number as illustrated in FIG. 4D. In step 370, the control unit 100 determines whether the user presses the SEND key again. Upon detecting the press of the SEND key, the control unit 100 proceeds to step 380 in order to dial the edited telephone number as illustrated in FIG. 4E.

For example, in order to make an interoffice call to a telephone number "031-279-1234," of which the last four digits "1234" represent an extension number, the user has to add an extension access code "##" after the extension number "1234" and delete the remaining digits "031-279" using a delete key. Then the user can press the SEND key to dial the edited telephone number "1234##." In a case where only one (for example, 02-760-4908) of two or more telephone numbers (for example, 02-760-4907 to 4908) of a company or a public office is stored in the phonebook, the user can dial the telephone number "02-760-4906," which is not stored in the phonebook, by selecting the telephone number editing mode with a short press of the SEND key, editing the stored telephone number "02-760-4908" with deletion of the last digit "8" and addition of "6" in place thereof, and pressing the SEND key again.

According to another preferred embodiment of the present invention, a frequently used code can be previously stored so that it can be read out from the memory and added to a telephone number, eliminating the need for the user to directly enter the code by key-pressings. For example, when the SEND key is quickly pressed twice, a previously stored code (for example, "##") can be automatically added before or after the detected telephone number as illustrated in FIG. 4F.

As explained above, when the user presses the SEND key during the display of a telephone number detected from the phonebook, the mobile terminal determines the SEND key input pattern and initiates a mode corresponding to the input pattern (for example, a mode for editing the telephone number, dialing the telephone number with an addition of a preset code or digit, or directly dialing the detected telephone number). The user can select the mode for editing the telephone number simply by pressing the SEND key, without the need to make multiple key-pressings as generally done in a conventional mobile terminal.

According to the present invention, the user only has to press the SEND key in a predetermined key input pattern in order to dial a stored telephone number with an addition of a specific code or with a change of a specific digit in the telephone number, which enhances the user's convenience.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. A method for editing a telephone number in a mobile terminal, comprising:
determining whether a call connection key is pressed during the display of a telephone number detected according to a user's request for search;
determining an input pattern of the call connection key;
displaying a mode for editing the detected telephone number when the input pattern is a telephone number editing pattern;
editing the telephone number according to a key input by the user; and
dialing the edited telephone number when the call connection key is pressed again during the display of the edited telephone number.

2. The method according to claim 1, wherein the input pattern is determined according to one of a duration of pressing the call connection key and a number of times the call connection key is pressed.

3. The method according to claim 1 or 2, further comprising dialing the detected telephone number when the input pattern is a dialing pattern.

4. The method according to claim 3, wherein the input pattern is determined according to one of a duration of pressing the call connection key and a number of times the call connection key is pressed.

5. The method according to claim 1 or 2, further comprising dialing the detected telephone number with an addition of a previously stored code when the input pattern is a pattern for using a specific service.

6. The method according to claim 5, wherein the input pattern is determined according to one of a duration of pressing the call connection key and a number of times the call connection key is pressed.

7. The method according to claim 5, wherein said specific service is one of an internal extension access and a caller number non-display service.

8. A mobile terminal for expediently editing a telephone number, comprising:
a memory for storing at least one telephone number;
a key input unit for outputting a key input signal corresponding to a key pressed by a user, the key input unit comprising a call connection key; and
a control unit for reading out a specific telephone number from the memory according to a request by the user for a search of the specific telephone number, detecting an input pattern of the call connection key, editing the specific telephone number based on a key input by the user when the input pattern is a telephone number editing pattern, and dialing the edited telephone number when the call connection key is pressed again.

9. The mobile terminal according to any of claim 8 or 9, wherein the input pattern is determined according to one of a duration of pressing the call connection key and a number of times the call connection key is pressed.

10. The mobile terminal according to claim 8 or 9, further comprising a display unit for displaying the specific telephone number, and displaying a mode for editing the specific telephone number when the input pattern is a predetermined telephone number editing pattern during the display of the specific telephone number.

11. The mobile terminal according to claim 10, wherein the input pattern is determined according to one of a duration of pressing the call connection key and a number of times the call connection key is pressed.

12. The mobile terminal according to one of claims 8 to 11, wherein said control unit directly dials the specific, telephone number when the input pattern is a dialing pattern.

13. The mobile terminal according to claim 12, wherein the input pattern is determined according to one of a duration of pressing the call connection key and a number of times the call connection key is pressed.

14. The mobile terminal according to one of claims 8 to 11, wherein said control unit dials the specific telephone number with an addition of a previously stored code when the input pattern is a pattern for using a specific service.

15. The mobile terminal according to any of claim 14, wherein the input pattern is determined according to one of a duration of pressing the call connection key and a number of times the call connection key is pressed.
